# EUROPEAN PATENT APPLICATION

(11) **EP 4 657 760 A1**
(43) Date of publication of application: **03.12.2025**
(21) Application number: 24178790.2
(22) Date of filing: 29.05.2024
(51) Int. Cl.: H04B 1/7143, H04L 1/00, H04W 52/02, H04W 4/80

(54) **METHOD FOR ADJUSTING A COMMUNICATION PARAMETER IN A BLE COMMUNICATION NETWORK**

(71) Applicant: DEWINE Labs GmbH, 8010 Graz (AT)
(72) Inventor: HOFMANN, Rainer, 8042 Graz (AT); SPÖRK, Michael, 8010 Graz (AT)
(74) Representative: Weiser Voith Gugler Patentanwälte Partnerschaft

(57) **Abstract**

The present invention relates to a method (9) for adjusting a communication parameter (7) in a Bluetooth Low Energy, BLE, communication network (1) having a first node (2) and a second node (3) communicating via a first BLE link (C₁), the communication parameter (7) being one of a transmit power (T), a data packet timing (t_{dp}), a maximum data packet length (Lₘₐₓ), a set (S) of frequency channels (Chⱼ) for frequency hopping and a physical modulation (PHY), the method (9) comprising: by the first node (2), determining (11) a local noise level (N) in at least one BLE Frame Spacing (I), and adjusting (12) the communication parameter (7) for the first BLE link (C₁) on the basis of the determined local noise level (N).

## Description

The present invention relates to a method for adjusting a communication parameter in a Bluetooth Low Energy, BLE, communication network having a first node and a second node communicating via a first BLE link, the communication parameter being one of a transmit power, a data packet timing, a maximum data packet length, a set of frequency channels for frequency hopping and a physical modulation.

The BLE specification provides for a set of (currently) up to forty narrowband frequency channels in the 2.4 GHz ISM band which may be used for exchanging data packets between nodes in each of successive communication intervals, see, e.g., the Bluetooth Core Specification, Version 5.4 prepared by the Core Specification Working Group. However, in many situations, some of these frequency channels suffer from high noise, e.g., due to multipath fading caused by stray reflections of a transmitted signal and/or interference with other wireless devices using the 2.4 GHz ISM band, e.g., frequencies of classic Bluetooth, Wi-Fi, ZigBee, ANT, microwave, etc. On the one hand, using a frequency channel with a too high noise or, for such a frequency channel, an insufficiently low transmit power, an unsuitable data packet timing resulting in an insufficiently low data packet rate, an error-prone long maximum data packet length or a physical modulation with insufficiently low robustness, impairs throughput, communication range, etc. On the other hand, using an unnecessarily high transmit power, an unsuitable data packet timing resulting in an unnecessarily high data packet rate, an unnecessarily short maximum data packet length or a physical modulation with unnecessarily high robustness for a frequency channel with low noise, impairs throughput, energy efficiency, etc.

To improve the quality of a BLE link, the BLE specification provides for, inter alia, frequency hopping, wherein communicating nodes change the frequency channel for each of subsequent communication intervals to mitigate the effects of individual bad quality frequency channels. When frequency channels are known to suffer from bad quality, they may be temporarily removed from the set of frequency channels ("blacklisted" or "blocklisted") and added again ("whitelisted" or "allowlisted") later, e.g., after a predetermined period or when their quality has increased. Frequency hopping with such an adjustment of the set of frequency channels is known in the art as "adaptive frequency hopping".

Many approaches for frequency channel management have been proposed, e.g., by M. Spörk et al. "Improving the Reliability of Bluetooth Low Energy Connections", Proceedings of the 2020 International Conference on Embedded Wireless Systems and Networks, pp. 144 - 155, utilising local noise floor, local signal-to-noise ratio and packet delivery ratio measured at a central node to blacklist frequency channels of bad quality.

However, current approaches for adjusting a communication parameter in a BLE connection network still suffer from slow and inaccurate adjustments. Hence, up to now, noisy frequency channels, insufficiently low or unnecessarily high transmit power or maximum data packet length and/or physical modulation with high throughput but insufficiently low robustness or with unnecessarily high robustness but little throughput remain being used, which results in BLE communication of lower than necessary energy efficiency, throughput and/or communication range.

It is an object of present invention to provide a method for adjusting a communication parameter in a BLE communication network which allows for a faster and more accurate communication parameter adjustment.

This object is achieved with a method as described in the outset, which is distinguished in that it comprises
by the first node, determining a local noise level in at least one BLE Frame Spacing, and adjusting the communication parameter for the first BLE link on the basis of the determined local noise level.

The BLE Frame Spacing (FS) is a mandatory short pause between consecutive data packets transmitted over the BLE link during each communication interval. Currently, three distinct BLE FS have been defined, the so-called "Inter Frame Spacing", "Minimum AUX Frame Spacing", and "Minimum Subevent Spacing", also known as "Inter Frame Space", "Minimum AUX Frame Space", and "Minimum Subevent Space", respectively.

The BLE FS serves to avoid collisions when multiple nodes transmit data simultaneously, to allow for a change from receiving to transmitting and vice versa, to improve energy efficiency by reducing unnecessary re-/transmissions of packets and to synchronise transmitting and receiving nodes as they are aware of when the next data packet is expected, aiding in proper reception and decoding of data.

The method of the invention utilises the mandatory BLE FS to determine the local noise level and to adjust one or more communication parameters, namely the transmit power, the data packet timing, the maximum data packet length, the set of frequency channels for frequency hopping and/or the physical modulation used by the first and/or second nodes for the first BLE link, on the basis of the local noise level determined in, i.e. during, the BLE FS. This has several advantages:
Firstly, determining the local noise level in the BLE FS instead of waiting for the end of a communication interval allows to adjust the communication parameter already during the same communication interval. For instance, when a high noise level is determined for the frequency channel used in that communication interval, the first node may, already during this communication interval, increase its transmit power and/or instruct the second node to do so in order to increase robustness and, thus, throughput. On the other hand, when a low noise level is determined for the frequency channel used in that communication interval, the first node may, already during this communication interval, lower its transmit power and/or instruct the second node to do so to increase energy efficiency.
Secondly, determining the local noise level in a BLE FS, i.e. right after the transmission or reception of a data packet, allows to capture and take into account noise due to multipath fading caused by stray reflections of a transmitted signal. Thus, the local noise level can be determined and the communication parameter can be adjusted particularly accurately.
Thirdly, the BLE FS is a time interval during which no BLE data packets are expected. Hence, the probability of mistaking a BLE data packet of another BLE node in the BLE communication network for noise is reduced.
Fourthly, determining the local noise level several times in subsequent BLE FSs of the same communication interval allows for resolving the evolution of the local noise level accurately over time.
Fifthly, external interference can be easily detected by a failure of data packet reception and a high local noise level in the BLE FS, and, thus, accounted for when adjusting the communication parameter.
Sixthly, determining the local noise level in the BLE FS does not impact throughput and latency of the BLE communication as the mandatory FS is not used for data packet exchanges.

Summing up, utilising the BLE FS for noise level determination allows to adjust the communication parameter fast and accurately and, thus, to increase throughput, communication range, real-time capabilities and energy efficiency of a BLE link.

In a beneficial embodiment, the method further comprises:
by the second node, determining at least one radio metric from a group consisting of a local received signal strength, a local noise level, a local transmit power, a local data packet timing, a local data packet length and a local data packet error rate, and transmitting the determined at least one radio metric to the first node; and
by the first node, receiving the transmitted at least one radio metric, and, in said step of adjusting, adjusting the communication parameter also on the basis of the received at least one radio metric.

In this embodiment, the first node utilises a radio metric determined by another node, the remote second node, to adjust the communication parameter for the BLE connection more accurately. As the second node - by transmitting the radio metric - at least implicitly provides information about its local setting or environment, the first node has non-local data available for adjusting the communication parameter in a more accurate way to increase energy efficiency, throughput, real-time capabilities and/or communication range for the first BLE link. Advantageously, in said step of determining, the second node determines the local noise level in at least one BLE FS. Thereby, the first node utilises both the noise level determined by the second node, i.e. a non-local noise level for the first node, and the local noise level determined by itself to adjust the communication parameter even more accurately or faster.

In a first variant of this embodiment, in said step of determining, the first and second nodes determine the respective local noise level for one and the same subset of frequency channels of the set. Thus, the first node collects local and non-local noise levels for said subset of frequency channels to adjust the communication parameter particularly accurately.

In a second variant of this embodiment, in said step of determining, the first and second nodes determine the respective local noise level for different subsets of frequency channels of the set. Thus, the first and second nodes share the effort for determining the local noise level for the frequency channels of the subset.

In some embodiments, the local noise level is determined for all of the frequency channels for which the communication parameter is adjusted.

In other embodiments, the local noise level is determined for some frequency channels and estimated, e.g., interpolated or extrapolated, for other frequency channels for which no local noise level has been determined either recently or at all and the communication parameter is adjusted for said some and said other frequency channels. Thus, the communication parameter can be adjusted very fast and efficiently for a large number of frequency channels. Such an estimation works particularly well in the presence of broadband interference which affects several neighbouring frequency channels similarly, e.g., interference caused by other wireless devices using broader frequency channels than BLE.

In a first favourable embodiment thereof, in said step of determining, the local noise level is determined for a lowest and a highest frequency channel of a subset of at least three and at most ten neighbouring frequency channels of the set, and, in said step of adjusting, the first node evaluates whether the local noise levels determined for the lowest and highest frequency channels are similar and, if so, adjusts the communication parameter for all the frequency channels of said subset in the same way. Thereby, intermediate frequency channels of said subset are considered similar to the lowest and highest frequency channels ("interpolated") to adjust the communication parameter fast and efficiently for said subset.

In a second favourable embodiment thereof, in said step of determining, the local noise level is determined for three neighbouring frequency channels two frequency channels of which being included in a subset of at least three and at most ten neighbouring frequency channels of the set and a third frequency channel of which not being included in this subset, and, in said step of adjusting, the first node evaluates whether the local noise levels determined for said two neighbouring frequency channels are similar to one another and not similar to the third frequency channel and, if so, adjusts the communication parameter for all the frequency channels of said subset in the same way. Thereby, the similarity of the two frequency channels and their dissimilarity with the third frequency channel indicates an onset, e.g., of broadband interference which is assumed to affect all frequency channels of the subset. Thus, the other frequency channels of said subset are considered similar to said two frequency channels ("extrapolated") to adjust the communication parameter fast and efficiently for said subset.

The similarity of local noise levels for two frequency channels may be determined in a number of ways employing one of a plurality of similarity metrics.

In one variant, in said step of adjusting, the first node evaluates whether the local noise levels determined for the respective two frequency channels are similar by evaluating whether the local noise levels determined for the respective two frequency channels exceed a predetermined noise level threshold value. In this way, the similarity can be evaluated particularly fast and efficiently by making use of the fact that interference by broadband wireless devices generally causes high noise levels in several neighbouring frequency channels including the respective two frequency channels.

In an alternative variant, in said step of determining, the evolution of the local noise level over time is determined, and, in said step of adjusting, the first node evaluates whether the determined local noise levels for the respective two frequency channels are similar by evaluating whether the evolutions of the local noise levels over time determined for the respective two frequency channels are similar. The similarity can be evaluated particularly accurately according to this embodiment as an interference by broadband wireless devices causes similar evolutions of the local noise levels over time for all affected frequency channels.

Advantageously, in each of the abovementioned embodiments and variants the first node is a central node and the second node is a peripheral node. In this way, the typically higher computation power of the central node is utilised to adjust the communication parameter fast and accurately.

Of course, the BLE communication network may (and often will) have more than two nodes, e.g. three, four, five or more nodes. Thus, the method described herein may be carried out between any two or more nodes of a multi-node BLE communication network.

The invention will now be described by means of exemplary embodiments thereof with reference to the enclosed drawings, in which show:
Fig. 1 a Bluetooth Low Energy (BLE) communication network having a first and a second node communicating via a first BLE link, in a schematic top view;
Fig. 2 a set of frequency channels used by the first and second nodes of Fig. 1 for frequency hopping, in a diagram over frequency;
Fig. 3 a local signal power in the first node of Fig. 1 for two exemplary communication intervals using two frequency channels of Fig. 2 in succession, in a diagram of signal power over time;
Fig. 4 a table of communication parameters used for the first BLE link of Fig. 1;
Fig. 5 a method for adjusting at least one communication parameter of Fig. 4 carried out by the first node of Fig. 1, in a flow diagram;
Fig. 6 a local noise level determined by the first node or the first and second nodes of Fig. 1 for two frequency channels of said set of Fig. 2, in a diagram of local noise level over frequency;
Fig. 7 a local noise level determined by the first node or the first and second nodes of Fig. 1 for three neighbouring frequency channels of said set, in a diagram of local noise level over frequency; and
Fig. 8 local noise levels determined by the first node or the first and second nodes of Fig. 1, each for a respective frequency channel of the set of Fig. 2 in a respective diagram of local noise level over time.

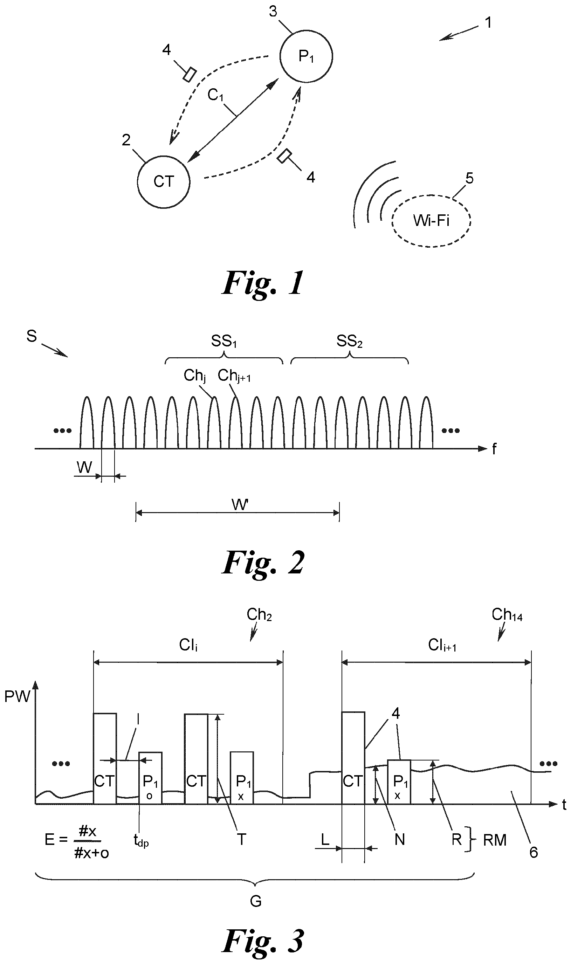

Fig. 1 shows a Bluetooth low energy (BLE) communication network 1 which has at least a first node 2 (here: a central node CT, alternatively a peripheral node) and a second node 3 (here: a peripheral node P₁). The first and second nodes 2, 3 communicate via a first BLE link C₁ according to a BLE specification such as the Bluetooth Core Specification prepared by the Core Specification Working Group. Herein, a "BLE link" may be any type of link or connection between two BLE nodes, e.g. a so-called "BLE connection", a connection for "Periodic Advertising with Responses (PAwR)", etc.

In the course of a typical communication, the first and second nodes 2, 3 exchange data packets 4 in each of successive communication intervals CI₁, CI₂, ..., generally CIᵢ (Fig. 3). The communication intervals CIᵢ may be so-called "connection intervals" (likewise "connection events"), e.g. in case of a BLE one-to-one communication (Fig. 3), or so-called "periodic advertising intervals" or "periodic advertising subevent intervals" (likewise "advertising events" or "advertising subevents"), e.g. in case of a BLE broadcast communication, for instance in PAwR.

Fig. 2 depicts a set S of up to forty frequency channels Ch₁, Ch₂, ..., generally Chⱼ, in the 2.4 GHz Industrial, Scientific and Medical ("ISM") band provided by the BLE specification for communicating, three of which being typically used for so called scanning and advertising when establishing a BLE link. Each frequency channel Chⱼ has a given channel width W of typically 2 MHz. In some situations, at least some of these frequency channels Chⱼ suffer from noise, e.g., due to multipath fading caused by stray reflections of a transmitted signal, and/or interference with other wireless devices using the 2.4 GHz ISM band, e.g., a WI-FI device 5 (Fig. 1) using a channel width W' of typically 20 or 40 MHz.

It is noted that the present disclosure may likewise be utilised for a different number of frequency channels Chⱼ, width W of frequency channels Chᵢ and/or for a different frequency band used by BLE, e.g., a 5 GHz band in the future.

To reduce the usage of a frequency channel Chⱼ which has a bad quality, the first and second nodes 2, 3 use frequency hopping, wherein they change the used frequency channel Chⱼ for each of subsequent communication intervals CIᵢ, CIᵢ₊₁. Fig. 3 illustrates such frequency hopping exemplarily in a diagram of signal power PW in the first node 2 over time t for two successive communication intervals CIᵢ, CIᵢ₊₁. In this example, frequency channel Ch₂ is used to exchange four data packets 4 between the first and second nodes 2, 3 in the first communication interval CIᵢ and frequency channel Ch₁₄ is used to exchange two data packets 4 between the first and second nodes 2, 3 in the second communication interval CIᵢ₊₁. Between two consecutive data packets 4 transmitted over the BLE link C₁ during each communication interval CIᵢ, a mandatory short pause, the so-called BLE Frame Spacing ("FS") I is scheduled according to the BLE specification. The BLE FS I may, e.g., be the so-called "Inter Frame Spacing/Space" of (currently) generally 150 µs, the so-called "Minimum AUX Frame Spacing/Space", or the so-called "Minimum Subevent Spacing/Space".

As can be seen in Fig. 3, the first node 2 transmits its data packets 4 (denoted 'CT') with a transmit power T and receives the data packets 4 from the second node 3 (denoted 'Pᵢ') with a received signal strength R, e.g., measured as a received signal strength indicator (RSSI), and with a data packet length L which may be a length in time or in bits. Each data packet 4 is transmitted or received at a certain data packet timing t_{dp} which may be an absolute time, a time difference with respect to an expected anchor point or a data packet rate. Some of the received data packets 4 are received without an error and can be fully read (indicated by "o") and others are received with an error and cannot be fully read (indicated by "x"). An error rate E indicates the amount of erroneous data packets 4 and may be, e.g., computed by dividing the number of erroneous data packets 4 (denoted by "#x") by the total number of data packets 4 (denoted by "#x+o").

The desired signals are superposed by noise 6 having a noise level N that typically differs for different frequency channels Chⱼ and changes over time. In the example of Fig. 3, the noise level N is higher for frequency channel Ch₁₄ than for frequency channel Ch₂ as the former is affected by the nearby WI-FI device 5.

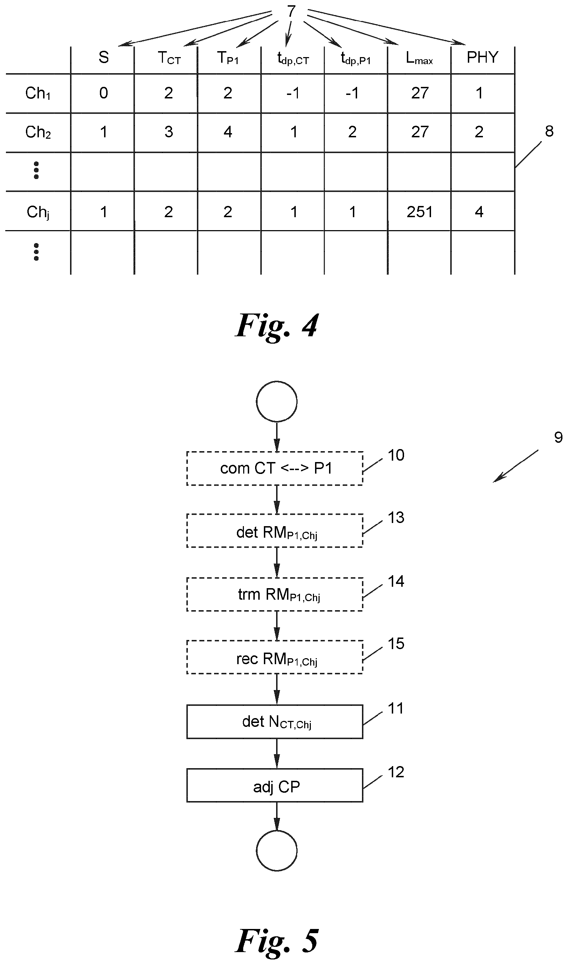

To adapt the communication to different channel qualities, one or more communication parameters 7 of the first BLE link C₁, i.e. (i) the transmit power T, (ii) the data packet timing t_{dp}, (iii) a maximum data packet length Lₘₐₓ, (iv) the set S of frequency channels Chⱼ used for frequency hopping, and/or (v) a physical modulation PHY may be adjusted for one, several or all frequency channels Chⱼ as shall now be explicated with reference to Fig. 4.

Fig. 4 depicts an exemplary table 8 which holds, for the first BLE link C₁, in the first column the set S of frequency channels Chⱼ. Therein, '1' identifies those frequency channels Chⱼ that are currently in the frequency set S and, thus, used for frequency hopping and '0' identifies the other channels Chⱼ. In the second and third columns, table 8 holds the transmit power T for the first node 2 ('T_{CT}') and for the second node 3 ('T_{P1}') in the respective frequency channel Chⱼ, wherein higher numbers in the table 8 indicate higher transmit power T; in the fourth and fifth columns, table 8 holds the data packet timing t_{dp} for the first node 2 ('t_{dp,C1}') and for the second node 3 ('t_{dp,P1}'), respectively, wherein higher numbers for the data packet timing t_{dp} indicate a later transmission of data packets 4, and lower numbers an earlier transmission of data packets 4. In the sixth column, table 8 holds a maximum data packet length Lₘₐₓ which may be a maximum length in time or in bits (in Fig. 4: in bytes). In the seventh column, table 8 holds the physical modulation PHY which is the type of modulation used, e.g., LE 1M PHY (type '1'), LE 2M PHY (type '2'), LE Coded PHY S=8 (type '3'), LE Coded PHY S=2 (type '4'), or the like known in the art. It is noted that the transmit power T, the data packet timing t_{dp}, the maximum data packet length Lₘₐₓ and the physical modulation PHY may be different or the same for the first and second nodes 2, 3, i.e., they may be but need not be node-specific.

With reference to Fig. 5, a method 9 for adjusting one or more of the communication parameters 7 shall now be described.

In an optional (dashed) first step 10 of the method 9, the communication between the first and second nodes 2, 3, i.e. the first BLE link C₁, is established as known in the art.

In a second step 11 of the method 9, the first node 2 determines the local noise level N in at least one BLE FS I (Fig. 3). This can generally be done for one or more frequency channels Chⱼ in one or more communication intervals CIᵢ. For instance, the local noise level N may be determined in one current communication interval CIᵢ for one or more frequency channels Chⱼ, e.g. in each BLE FS I for a different frequency channel Chⱼ, in one BLE FS I for two or more different frequency channels Chⱼ, etc. Alternatively, the local noise level N may be determined in several communication intervals CIᵢ for one or more frequency channels Chⱼ. Thus, the determined local noise level N may (and typically will) depend on the particular frequency channel Chⱼ, which is depicted by the subscript in Fig. 5, e.g. 'N_{CT,Chj}'.

In a third step 12 of the method 9, the first node 2 adjusts at least one of said communication parameters 7 for the first BLE link C₁ on the basis of the determined local noise level N.

Many adjustments of one or more communication parameters 7 in step 12 on the basis of the local noise level N determined in step 11 for one or more frequency channels Chⱼ are possible.

In one example, the first node 2 evaluates in step 12 for each of said one or more frequency channels Chⱼ whether the local noise level N determined in step 11 for that frequency channel Chⱼ is high, e.g., above a given first noise level threshold, and, if so, adjusts the communication parameter/s 7 by increasing the transmit power T of the first node 2 ('T_{CT}' in Fig. 4) and/or of the second node 3 ('T_{P1}' in Fig. 4) for that frequency channel Chⱼ, by shifting the data packet timing t_{dp} of the first node 2 and/or the second node 3 for that frequency channel Chⱼ to earlier times, e.g. to obtain a higher data packet rate, by decreasing the maximum data packet length Lₘₐₓ of the first node 2 and/or of the second node 3 for that frequency channel Chⱼ, by removing that frequency channel Chⱼ from the set S, or by changing to a more robust physical modulation PHY, e.g., to LE Coded PHY S=8 or S=2, for that frequency channel Chⱼ. Generally, each of these adjustments may be used exclusively or at least some of them in combination. For example, the transmit power T for a respective frequency channel Chⱼ may be increased when the transmit power T is below a transmit power threshold, otherwise this frequency channel Chⱼ may be removed from the set S. Likewise, a respective frequency channel Chⱼ may be removed from the set S when the set S currently includes more than a given number of frequency channels Chⱼ, otherwise the transmit power T for this frequency channel Chⱼ may be increased, etc.

For instance, in the example of Fig. 4, the first frequency channel Ch₁ is (e.g. temporarily) removed ("blocklisted" as indicated by '0') from the set S of frequency channels Chⱼ. This frequency channel Ch₁ may be added again ("allowlisted"), e.g. after a predetermined period of time is elapsed or when its noise level has decreased again, for instance, in a probing communication interval CIᵢ or BLE FS I. Accordingly, the set S of frequency channels Chⱼ is adaptive.

Of course, for increasing the transmit power T of the second node 3, the first node 2 has to instruct the second node 3 to comply, which is, e.g., depicted by the higher number '4' in exemplary table 8 of Fig. 4 in order to increase transmit power T_{P1} of the second node 3 in frequency channel Ch₂. This applies, likewise, to removing one or more frequency channels Chⱼ from the set S, to decreasing the maximum data packet length Lₘₐₓ and to changing the physical modulation PHY used by the second node 3.

In an alternative or additional example, the first node 2 evaluates in step 12 for each of said one or more frequency channels Chⱼ whether the local noise level N determined in step 11 for that frequency channel Chⱼ is low, e.g., below a given second noise level threshold, and, if so, adjusts the communication parameter/s 7 by decreasing the transmit power T of the first node 2 and/or the second node 3 for that frequency channel Chⱼ, by shifting the data packet timing t_{dp} of the first node 2 and/or the second node 3 for that frequency channel Chⱼ to later times, e.g. to obtain a lower data packet rate, by increasing the maximum data packet length Lₘₐₓ of the first node 2 and/or of the second node 3 for that frequency channel Chⱼ, or by changing to a higher throughput physical modulation PHY, e.g. to LE 1M PHY or LE 2M PHY, for that frequency channel Chⱼ. Again, each of these adjustments may be used exclusively or at least some of them in combination.

Optionally, the first node 2 may determine, in addition to the local noise level N, one or more further radio metrics RM from a group G consisting of said local received signal strength R, local noise level N, local transmit power T, local data packet timing t_{dp}, local data packet length L and local data packet error rate E in step 11, and adjust the communication parameter/s 7 also on the basis thereof in step 12. To this end, the first node 2 may combine the local noise level N with one or more further radio metrics RM and adjust one or more communication parameters 7 on the basis of this combination of radio metrics RM.

As shown in Fig. 5, the method 9 optionally comprises, prior to step 12, further steps 13 to 15 to adjust the communication parameter/s 7 also on the basis of non-local data.

In a fourth step 13 of the method 9, the second node 3 determines at least one radio metric RM from said group G consisting of one of said local received signal strength R, local noise level N, local transmit power T, local data packet timing t_{dp}, local data packet length L and local data packet error rate E, wherein "local" refers to the second node 3. This may be done for one or more frequency channels Chⱼ in one or more communication intervals CIᵢ, e.g., as described above for step 11. For example, the second node 3 may also determine the local noise level N, in particular in at least one BLE FS I.

In a fifth step 14 of the method 9, the second node 3 transmits the determined at least one radio metric RM to the first node 2, e.g., in one or more data packets 4 transmitted in one or more communication intervals CIᵢ.

In a sixth step 15 of the method 9, the first node 2 receives the transmitted at least one radio metric RM from the second node 3, e.g., in said one or more data packets 4.

Then, in said step 12 of adjusting, the first node 2 adjusts said one or more communication parameters 7 also on the basis of the at least one radio metric RM determined by the second node 3, e.g. as explained above.

Again, many combinations of determining one or more radio metrics RM of said group G in step 13 and adjusting one or more communication parameters 7 (i) - (v) in step 12 on the basis of the determined local noise level N and further radio metric/s RM are possible. For example, when the second node 3 determines a high local transmit power T in step 13 and the first node 2 determines a high local noise level N in step 11, the first node 2 may adjust the communication parameter/s 7 by removing the respective frequency channel Chⱼ from the set S in step 12. Alternatively or additionally, when the second node 3 determines a high local transmit power T in step 13 and the first node 2 determines a low local noise level N in step 11, the first node 2 may adjust the communication parameter/s 7 by decreasing the transmit power T of the second node 3 and/or of the first node 2 in step 12.

The first and second nodes 2, 3 may determine the same or different radio metrics RM, each time for the same or different frequency channels Chⱼ in said steps 11 and 13.

In one embodiment, the first and second nodes 2, 3 determine the local noise level N for one and the same ("common") subset SS₁ (Fig. 2) of frequency channels Chⱼ of the set S, i.e., each for the same frequency channels Chⱼ. Alternatively, the first and second nodes 2, 3 may determine the local noise level N for different subsets SS₁, SS₂ (Fig. 2) of frequency channels Chⱼ of the set S, i.e. for different frequency channels Chⱼ. In particular, the first and second nodes 2, 3 may determine the local noise level N alternatingly in consecutive communication intervals CIᵢ or BLE FSs I and, thereby, share the effort to probe the frequency spectrum.

The one or more communication parameters 7 may be adjusted for several frequency channels Chⱼ one by one, e.g., after or during each communication interval CIᵢ. In some embodiments however, the one or more communication parameters 7 are adjusted for several frequency channels Chⱼ together, sometimes even for one or more frequency channels Chⱼ for which the local noise level N has not been determined (recently or at all), e.g., for one or more frequency channels Chⱼ next to a frequency channel Chⱼ with a particularly good or bad quality.

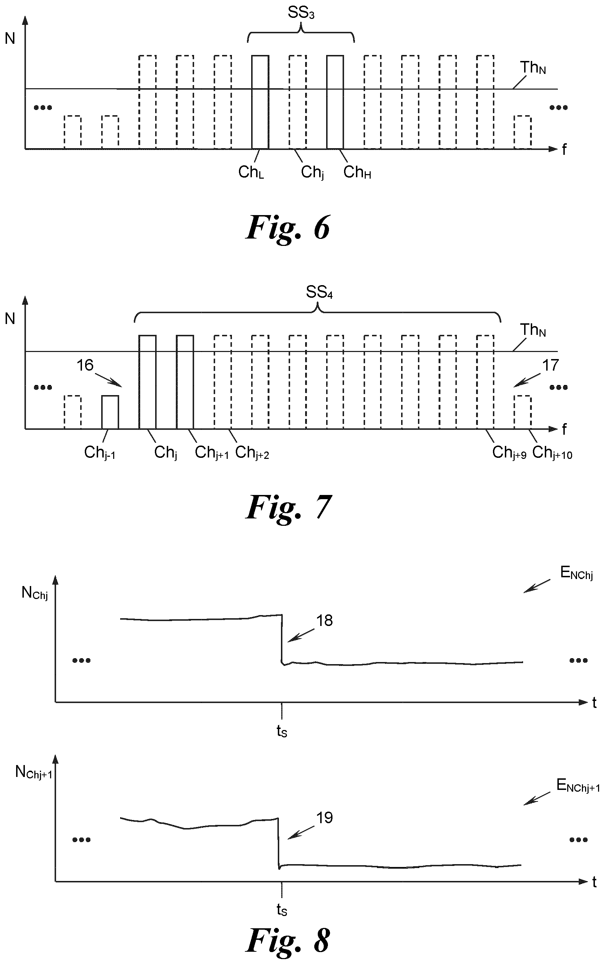

With reference to Figs. 6 and 7, exemplary embodiments utilising an interpolation (Fig. 6) or extrapolation (Fig. 7) of the local noise level N for determining and adjusting in steps 11 and 12 (and optionally in step 13) shall be described.

In a first exemplary embodiment shown in Fig. 6, the first node 2 determines the local noise level N in step 11 for a lowest frequency channel Ch_{L} and for a highest frequency channel Ch_{H} (shown in continuous lines) of a subset SS₃ of the set S and not for other frequency channels Chⱼ (shown in dashed lines in Fig. 6) of the subset SS₃. The subset SS₃ is comprised of at least three and at most ten neighbouring frequency channels Chⱼ of the set S (here: of three neighbouring frequency channels Chⱼ of the set S). Alternatively or additionally, the local noise level N for one of the lowest and highest frequency channel Ch_{L}, Ch_{H} may be determined by the second node 3 in optional step 13. In said step 12 of adjusting, the first node 2 evaluates whether the determined local noise levels N for the lowest and highest frequency channels Ch_{L}, Ch_{H} of the subset SS₃ are similar (here: both above a noise level threshold Th_{N}), e.g. as described below, and, if so, adjusts the one or more communication parameter 7 for all the frequency channels Chⱼ of said subset SS₃ in the same way, e.g., as described in the examples above. Thereby, the local noise level N is assumed to be similar ("interpolated") for all frequency channels Chⱼ between the lowest and highest frequency channels Ch_{L}, Ch_{H}.

In a second exemplary embodiment shown in Fig. 7, the first node 2 determines the local noise level N in step 11 for three neighbouring frequency channels Chⱼ₋₁, Chⱼ, Chⱼ₊₁ (shown in continuous lines) and not for adjacent frequency channels (shown in dashed lines). Alternatively or additionally, the local noise level N for one or two of the three neighbouring frequency channels Chⱼ₋₁, Chⱼ, Chⱼ₊₁ may be determined by the second node 3 in optional step 13. Two neighbouring frequency channels Chⱼ, Chⱼ₊₁ of these neighbouring frequency channels Chⱼ₋₁, Chⱼ, Chⱼ₊₁ are included in a subset SS₄ of at least three and at most ten neighbouring frequency channels Chⱼ of the set S (here: of ten neighbouring frequency channels Chⱼ) and the third frequency channel Chⱼ₋₁ of these neighbouring frequency channels Chⱼ₋₁, Chⱼ, Chⱼ₊₁ is not included in this subset SS₄. Then, in said step 12 of adjusting, the first node 2 evaluates whether the determined local noise levels N for said two neighbouring frequency channels Chⱼ, Chⱼ₊₁ are similar to one another (here: above or below the noise level threshold Th_{N}) and not similar to the third frequency channel Chⱼ₋₁ (here: below or above the noise level threshold Th_{N}), e.g., as described below, and, if so, adjusts the communication parameter 7 for all the frequency channels Chⱼ of said subset SS₄ in the same way, e.g. as described above.

Thereby, a substantial shift 16 in the determined values of the local noise level N between the third frequency channel Chⱼ₋₁ (the one outside the subset SS₄) and the neighbouring two frequency channels Chⱼ, Chⱼ₊₁ (inside the subset SS₄) is detected. Moreover, it is assumed, that the shift 16 marks the edge of a broadband interference, e.g., caused by the nearby WIFI-device 5 (Fig. 1) and that the interference is similar for all frequency channels Chⱼ in the subset SS₄. Thus, the local noise level N is extrapolated for the frequency channels Chⱼ₊₂ - Chⱼ₊₉.

Alternatively, the lower frequency channels Chⱼ₋₁ and Chⱼ may be included in said subset SS₄ and the higher frequency channel Chⱼ₊₁ may lie outside the subset SS₄, such that, other than shown in the example of Fig. 7, the subset SS₄ would extend from frequency channels Chⱼ and Chⱼ₋₁ to the left. When, in this case, detecting a shift 17 between the frequency channels Chⱼ₋₁ and Chⱼ, the extrapolation would be in the other direction of the frequency spectrum, i.e. to the left in Fig. 7.

In both exemplary embodiments, the number of frequency channels Chⱼ in the respective subset SS₃, SS₄ may be predetermined, e.g., being set to three, four, five, six, etc., or determined by the first node 2 on the fly, e.g., by identifying an interfering device and its channel width on the basis of its communication behaviour, e.g., on the basis of data packet lengths, data packet timing or the like.

The similarity of the determined local noise levels N for respective two frequency channels Chⱼ, e.g. for the lowest and highest frequency channels Ch_{L}, Ch_{H} of the subset SS₃ in Fig. 6 or the two frequency channels Chⱼ, Chⱼ₊₁ of the subset SS4 in Fig. 7, may be evaluated in many ways, e.g., according to one of the following two variants.

In an exemplary first variant which is shown in Figs. 6 and 7, the first node 2 evaluates whether the determined local noise levels N exceed a predetermined noise level threshold value Th_{N} or not. Thereby, high amplitude broadband noise, e.g., as caused by the nearby WI-FI device 5, is identified.

In a second variant depicted in Fig. 8 the evolution E of the local noise level N is determined over time for the two frequency channels Chⱼ, Chⱼ₊₁. In the upper diagram of Fig. 8, the evolution E_{NChj} of the local noise level N_{Chj} in frequency channel Chⱼ is depicted and, in the lower diagram, the evolution E_{NChj+1} of the local noise level N_{Chj+1} in frequency channel Chⱼ₊₁. Then, in step 12 of adjusting, the first node 2 evaluates whether the evolutions E_{NChj}, E_{NChj+1} of the local noise levels N_{Chj}, N_{Chj+1} are similar over time. To assess this similarity over time, any measure derived from the evolutions E_{NChj}, E_{NChj+1} may be applied, e.g., a cross-correlation, a summation or integration of differences, a (summed) difference of a number, height and/or timing of steps 18, 19, of minima and/or of maxima etc.

In the example of Fig. 8, the evolutions E_{NChj}, E_{NChj+1} of the local noise levels N_{Chj}, N_{Chj+1} are evaluated to be similar as the steps 18, 19 occur approximately at the same time tₛ.

While, for simplicity reasons, Fig. 1 shows a BLE communication network 1 with only two nodes 2, 3, the BLE network 1 may have more nodes, e.g., three, four, five or more. Accordingly, the method 9 of Fig. 5 may be carried out between any two or more nodes in such a multi-node BLE communication network 1.

In general, the steps of the method 9 may be carried out in any order as long as one step does not depend on the result of another step. Hence, the enumeration "first", "second", etc. does not imply a specific order or the presence of certain steps.

Moreover, it is understood that the local noise level N may either be determined only in BLE FSs as described above for steps 11 and 13 or, optionally, also outside of BLE FSs, e.g., between consecutive communication intervals CIᵢ.

The invention is not restricted to the specific embodiments described above but encompasses all variants, modifications and combinations thereof that fall within the scope of the appended claims.

## Claims

1. A method for adjusting a communication parameter (7) in a Bluetooth Low Energy, BLE, communication network (1) having a first node (2) and a second node (3) communicating via a first BLE link (C₁), the communication parameter (7) being one of a transmit power (T), a data packet timing (t_{dp}), a maximum data packet length (Lₘₐₓ), a set (S) of frequency channels (Chⱼ) for frequency hopping and a physical modulation (PHY), the method (9) comprising:
by the first node (2), determining (11) a local noise level (N) in at least one BLE Frame Spacing (I), and adjusting (12) the communication parameter (7) for the first BLE link (C₁) on the basis of the determined local noise level (N).

2. The method according to claim 1, further comprising:
by the second node (3), determining (13) at least one radio metric (RM) from a group (G) consisting of a local received signal strength (R), a local noise level (N), a local transmit power (T), a local data packet timing (t_{dp}), a local data packet length (L) and a local data packet error rate (E), and transmitting (14) the determined at least one radio metric (RM) to the first node (2); and
by the first node (2), receiving (15) the transmitted at least one radio metric (RM) and, in said step of adjusting (12), adjusting the communication parameter (7) also on the basis of the received at least one radio metric (RM).

3. The method according to claim 2, wherein, in said step of determining (13), the second node (3) determines the local noise level (N) in at least one BLE Frame Spacing (I).

4. The method according to claim 2 or 3, wherein, in said step of determining (11, 13), the first and second nodes (2, 3) determine the respective local noise level (N) for one and the same subset (SS₁) of frequency channels (Chⱼ) of the set (S).

5. The method according to claim 2 or 3, wherein, in said step of determining (11, 13), the first and second nodes (2, 3) determine the respective local noise level (N) for different subsets (SS₁, SS₂) of frequency channels (Chⱼ) of the set (S) .

6. The method according to any one of claims 1 to 5, wherein, in said step of determining (11, 13), the local noise level (N) is determined for a lowest and a highest frequency channel (Ch_{L}, Ch_{H}) of a subset (SS₃) of at least three and at most ten neighbouring frequency channels (Chⱼ) of the set (S), and
wherein, in said step of adjusting (12), the first node (2) evaluates whether the local noise levels (N) determined for the lowest and highest frequency channels (Ch_{L}, Ch_{H}) are similar and, if so, adjusts the communication parameter (7) for all the frequency channels (Chⱼ) of said subset (SS₃) in the same way.

7. The method according to any one of claims 1 to 5, wherein, in said step of determining (11, 13), the local noise level (N) is determined for three neighbouring frequency channels (Chⱼ₋₁, Chⱼ, Chⱼ₊₁) two frequency channels (Chⱼ, Chⱼ₊₁) of which being included in a subset (SS₄) of at least three and at most ten neighbouring frequency channels (Chⱼ - Chⱼ₊₉) of the set (S) and a third frequency channel (Chⱼ₋₁) of which not being included in this subset (SS₄), and
wherein, in said step of adjusting (12), the first node (2) evaluates whether the local noise levels (N) determined for said two neighbouring frequency channels (Chⱼ, Chⱼ₊₁) are similar to one another and not similar to the third frequency channel (Chⱼ₋₁) and, if so, adjusts the communication parameter (7) for all the frequency channels (Chⱼ) of said subset (SS₄) in the same way.

8. The method according to claim 6 or 7, wherein, in said step of adjusting (12), the first node (2) evaluates whether the local noise levels (N) determined for the respective two frequency channels (Ch_{L}, Ch_{H}; Chⱼ, Chⱼ₊₁) are similar by evaluating whether the local noise levels (N) determined for the respective two frequency channels (Ch_{L}, Ch_{H}; Chⱼ, Chⱼ₊₁) exceed a predetermined noise level threshold value (Th_{N}).

9. The method according to claim 6 or 7, wherein, in said step of determining (11, 13), the evolution (E_{NChj}, E_{NChj+1}) of the local noise level (N_{Chj}, N_{Chj+1}) over time is determined, and
wherein, in said step of adjusting (12), the first node (2) evaluates whether the local noise levels (N) determined for the respective two frequency channels (Ch_{L}, Ch_{H}; Chⱼ, Chⱼ₊₁) are similar by evaluating whether the evolutions (E_{NChj}, E_{NChj+1}) of the local noise levels (N_{Chj}, N_{Chj+1}) over time determined for the respective two frequency channels (Ch_{L}, Ch_{H}; Chⱼ, Chⱼ₊₁) are similar.

10. The method according to any one of claims 1 to 9, wherein the first node (2) is a central node and the second node (3) is a peripheral node.

## Amended claims

### Amended claims in accordance with Rule 137(2) EPC.

1. A method for adjusting a communication parameter (7) in a Bluetooth Low Energy, BLE, communication network (1) having a first node (2) and a second node (3) communicating via a first BLE link (C₁), the communication parameter (7) being one of a transmit power (T), a data packet timing (t_{dp}), a maximum data packet length (Lₘₐₓ), a set (S) of frequency channels (Chⱼ) for frequency hopping and a physical modulation (PHY), the method (9) comprising:
by the first node (2), determining (11) a local noise level (N) in at least one BLE Frame Spacing (I), and adjusting (12) the communication parameter (7) for the first BLE link (C₁) on the basis of the determined local noise level (N), **characterised in that**, either:
in said step of determining (11, 13), the local noise level (N) is determined for a lowest and a highest frequency channel (Ch_{L}, Ch_{H}) of a subset (SS₃) of at least three and at most ten neighbouring frequency channels (Chⱼ) of the set (S), and
wherein, in said step of adjusting (12), the first node (2) evaluates whether the local noise levels (N) determined for the lowest and highest frequency channels (Ch_{L}, Ch_{H}) are similar and, if so, adjusts the communication parameter (7) for all the frequency channels (Chⱼ) of said subset (SS₃) in the same way,
or:
in said step of determining (11, 13), the local noise level (N) is determined for three neighbouring frequency channels (Chⱼ₋₁, Chⱼ, Chⱼ₊₁) two frequency channels (Chⱼ, Chⱼ₊₁) of which being included in a subset (SS₄) of at least three and at most ten neighbouring frequency channels (Chⱼ - Chⱼ₊₉) of the set (S) and a third frequency channel (Chⱼ₋₁) of which not being included in this subset (SS₄), and
wherein, in said step of adjusting (12), the first node (2) evaluates whether the local noise levels (N) determined for said two neighbouring frequency channels (Chⱼ, Chⱼ₊₁) are similar to one another and not similar to the third frequency channel (Chⱼ₋₁) and, if so, adjusts the communication parameter (7) for all the frequency channels (Chⱼ) of said subset (SS₄) in the same way.

2. The method according to claim 1, further comprising:
by the second node (3), determining (13) at least one radio metric (RM) from a group (G) consisting of a local received signal strength (R), a local noise level (N), a local transmit power (T), a local data packet timing (t_{dp}), a local data packet length (L) and a local data packet error rate (E), and transmitting (14) the determined at least one radio metric (RM) to the first node (2); and
by the first node (2), receiving (15) the transmitted at least one radio metric (RM) and, in said step of adjusting (12), adjusting the communication parameter (7) also on the basis of the received at least one radio metric (RM).

3. The method according to claim 2, wherein, in said step of determining (13), the second node (3) determines the local noise level (N) in at least one BLE Frame Spacing (I).

4. The method according to claim 2 or 3, wherein, in said step of determining (11, 13), the first and second nodes (2, 3) determine the respective local noise level (N) for one and the same subset (SS₁) of frequency channels (Chⱼ) of the set (S).

5. The method according to claim 2 or 3, wherein, in said step of determining (11, 13), the first and second nodes (2, 3) determine the respective local noise level (N) for different subsets (SS₁, SS₂) of frequency channels (Chⱼ) of the set (S).

6. The method according to any one of claims 1 to 5, wherein, in said step of adjusting (12), the first node (2) evaluates whether the local noise levels (N) determined for the respective two frequency channels (Ch_{L}, Ch_{H}; Chⱼ, Chⱼ₊₁) are similar by evaluating whether the local noise levels (N) determined for the respective two frequency channels (Ch_{L}, Ch_{H}; Chⱼ, Chⱼ₊₁) exceed a predetermined noise level threshold value (Th_{N}).

7. The method according to any one of claims 1 to 5, wherein, in said step of determining (11, 13), the evolution (E_{NChj}, E_{NChj+1}) of the local noise level (N_{Chj}, N_{Chj+1}) over time is determined, and
wherein, in said step of adjusting (12), the first node (2) evaluates whether the local noise levels (N) determined for the respective two frequency channels (Ch_{L}, Ch_{H}; Chⱼ, Chⱼ₊₁) are similar by evaluating whether the evolutions (E_{NChj}, E_{NChj+1}) of the local noise levels (N_{Chj}, N_{Chj+1}) over time determined for the respective two frequency channels (Ch_{L}, Ch_{H}; Chⱼ, Chⱼ₊₁) are similar.

8. The method according to any one of claims 1 to 7, wherein the first node (2) is a central node and the second node (3) is a peripheral node.
